# EUROPEAN PATENT APPLICATION

(11) **EP 4 787 269 A1**
(43) Date of publication of application: **05.08.2026**
(21) Application number: 25305127.0
(22) Date of filing: 30.01.2025
(51) Int. Cl.: G06Q 30/0207

(54) **SAVED WATTS USED FOR MASKING SOME PROGRAM**

(71) Applicant: InterDigital CE Patent Holdings, SAS, 75017 Paris (FR)
(72) Inventor: BLONDE, Laurent, 35235 THORIGNE-FOUILLARD (FR); DEMARTY, Claire-Helene, 35520 MONTREUIL LE GAST (FR); REDMANN, William, GLENDALE, 91205 (US); LE MEUR, Olivier, 35160 TALENSAC (FR); AUMONT, Franck, 35770 VERN SUR SEICHE (FR); REINHARD, Erik, 35630 HEDE-BAZOUGES (FR)
(74) Representative: Vossius & Partner Patentanwälte Rechtsanwälte mbB

(57) **Abstract**

A first device may include a processor configured to perform one or more of the following. The first device may receive replacement configuration information. The replacement configuration information may include replaceable content information and/or replacement mode information. The replaceable content information may indicate at least a first replaceable content associated with a first replacement value. The replacement mode information may indicate at least a first replacement mode. The first device may display a user interface that indicates one or more of the following: a saved balance value, at least a portion of the replaceable content information, and/or at least a portion of the replacement mode information. The first device may receive a user input indicating a selected replacement mode. The first device may determine an updated saved balance value based on the user input. The first device may generate replacement content based on the user input. The first device may display the generated replacement content.

## Description

### BACKGROUND

The present application is related to reducing individual and/or global carbon footprint(s) by lowering energy the consumption of electronic devices or systems, which may or may not include a display unit(s). Examples of such electronic devices or systems may include, for example, consumer electronics (e.g., TVs, monitors), mobile devices, and personal devices.

### BRIEF SUMMARY

Systems, methods, and instrumentalities are disclosed for energy savings, for example saved watts, used for masking a program. Saved watts may be stored in an account, for example, as a currency. Saved watts may be used as a currency to incentivize a user to reduce energy consumption on a device (e.g., consumer electronic, such as a television device). Saved watts may be used to select replaceable content with a replacement mode (e.g., masking content) as a reward for a user reducing energy consumption. The replacement mode may serve as a reduction in energy in addition to replacing the replaceable content (e.g., replacing content with a black screen or other energy reducing media which additionally reduces energy consumption). Users may be incentivized to reduce energy consumption based on the saved watts rewards. Broadcasters and/or operations may be incentivized to present saved watts rewards so they may reduce energy consumption and report such data in accordance with Scope 3 data reporting.

A device (e.g., consumer electronic and/or user device, such as a television) may enable a saved watts rewards program. The device may include a processor configured to carry out transactions related to saved energy rewards. The device may receive replacement configuration information including replaceable content information and/or replacement mode information. The replaceable content information may indicate a first replaceable content associated with a first replacement value (e.g., a cost associated with the replacement of the content, e.g., as defined by the service provider). The replacement mode information may indicate a first replacement mode (e.g., for masking the replaceable content, such as, for example, a static image, video, sound, etc.). The replacement mode may be associated with a saving value. The device may display a user interface that indicates a saved energy balance value (e.g., from an energy savings account). The user interface may indicate at least a portion of the replaceable content information (e.g., determined based on the saved energy balance value and the replaceable content information, e.g., replaceable content information with costs that the user account's saved energy balance is sufficient to cover, such as, for example, the first replaceable content and/or the first replacement value (e.g., cost)). For example, the device may determine that a second replaceable content is associated with a second replacement value (e.g., cost) that is less than the saved energy balance. Based on the determination that the second replacement value is less than the saved energy balance, the device may refrain from including the second replaceable content in the portion of the replaceable content. The user interface may indicate at least a portion of the replacement mode information. The device may receive a user input indicating a selected replacement mode. The device may receive a user input indicating a selected replaceable content. The selected replaceable content may be associated with a first energy usage. The selected replacement mode may be associated with a second energy usage. The second energy usage may be less than the first energy usage. The device may determine an updated saved balance value based on the user input (e.g., reducing the saved watts balance based on the cost associated with the selected replaceable content and/or increasing the saved watts balance based on the saving value associated with the selected replacement mode). The device may generate replacement content based on the user input. The device may display the generated replacement content. The device may display the generated replacement content at an indicated time slot and/or for a duration. The duration may depend on some criteria, for example the available saved energy balance or the chosen replaceable content, the time of the day, the current energy use at the service provider, etc.

In examples, the device may send a first indication to a second device (e.g., broadcaster/operator). The first indication may be sent based on the user input. The first indication may indicate a transaction parameter associated with the user input (e.g., selected replaceable content and/or selected replacement mode, and/or saved watts balance). The transaction parameter may be associated with the second device reporting scope 3 data. The device may receive at least one second indication (e.g., from the second device), that indicates a time (e.g., time slot) or a duration associated with the transaction parameter. The indicated time and duration may be used for the generated replacement content.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates functional features for replacing content with replacement mode.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

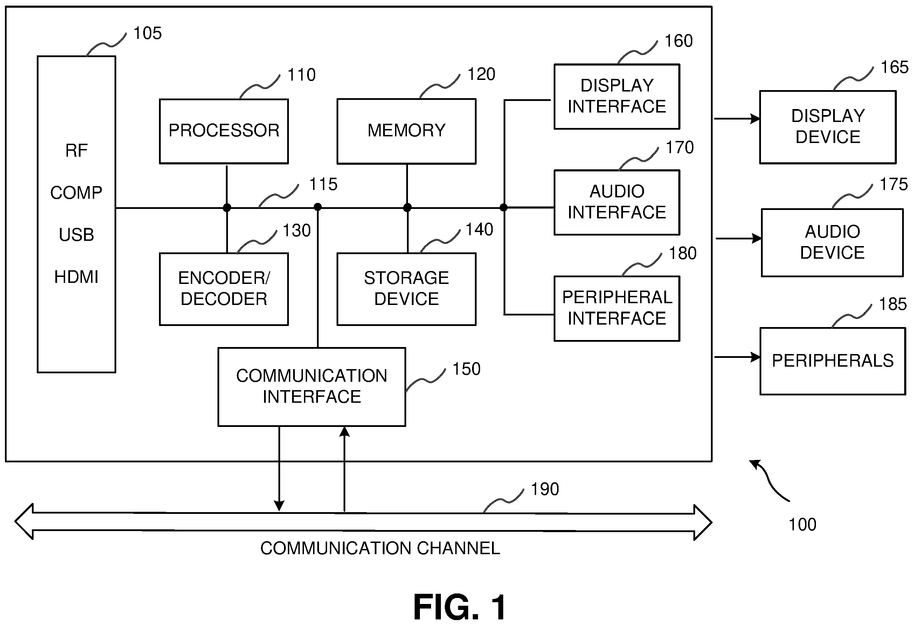

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, 3D, VR or AR glasses, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

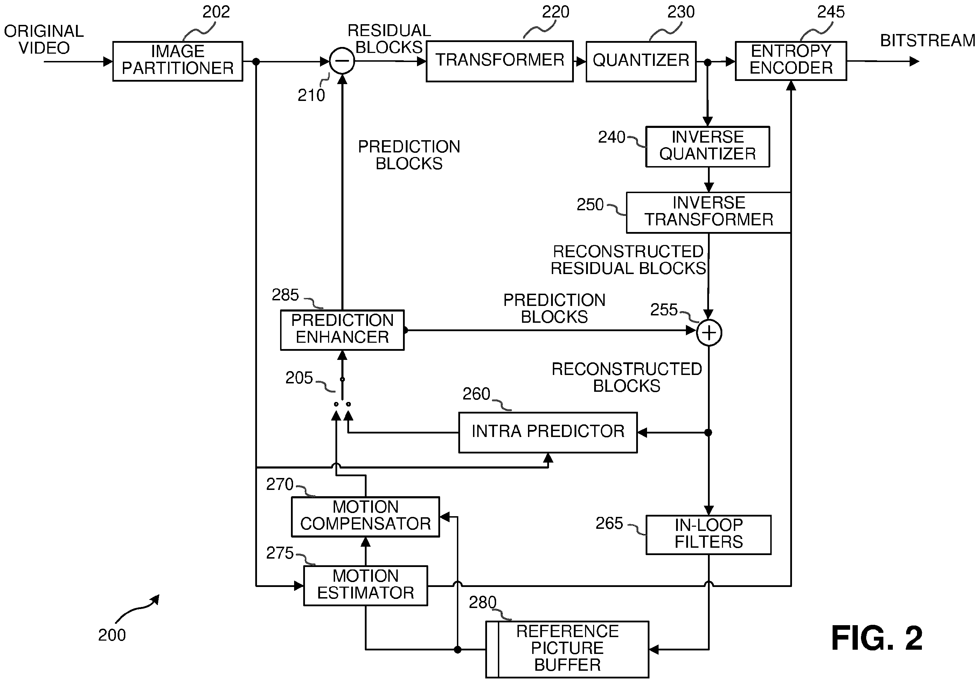

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

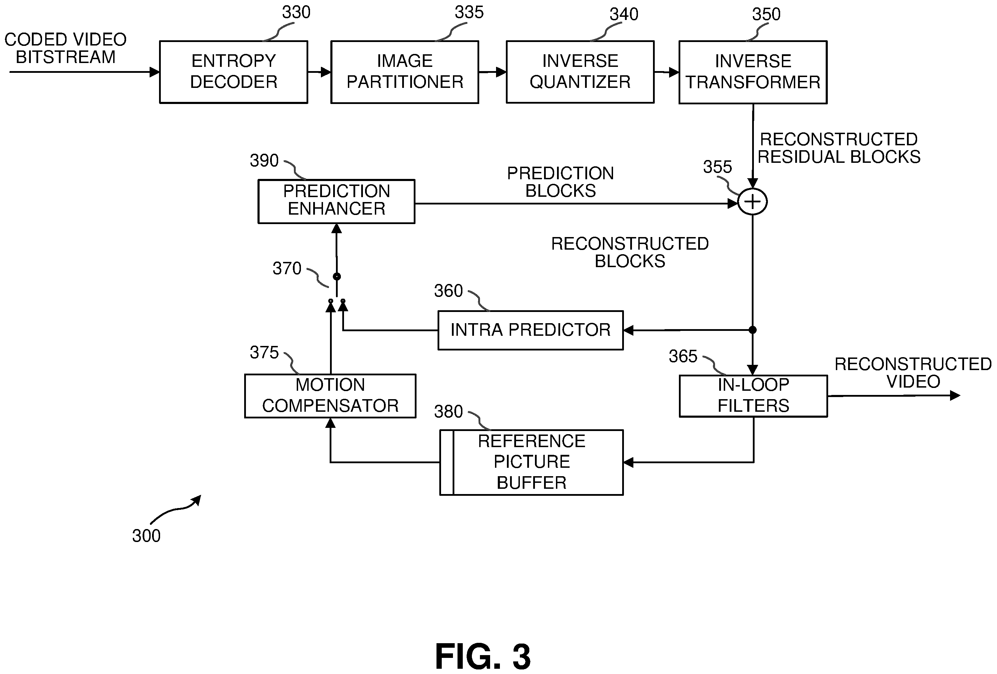

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for energy savings, for example saved watts, used for masking a program. Saved watts may be stored in an account, for example, as a currency. Saved watts may be used as a currency to incentivize a user to reduce energy consumption on a device (e.g., consumer electronic, such as a television device). Saved watts may be used to select replaceable content with a replacement mode (e.g., masking content) as a reward for a user reducing energy consumption. The replacement mode may serve as a reduction in energy in addition to replacing the replaceable content (e.g., replacing content with a black screen or other energy reducing media which additionally reduces energy consumption). Users may be incentivized to reduce energy consumption based on the saved watts rewards. Broadcasters and/or operations may be incentivized to present saved watts rewards so they may reduce energy consumption and report such data in accordance with Scope 3 data reporting.

A device (e.g., consumer electronic and/or user device, such as a television) may enable a saved watts rewards program. The device may include a processor configured to carry out transactions related to saved energy rewards. The device may receive replacement configuration information including replaceable content information and/or replacement mode information. The replaceable content information may indicate a first replaceable content associated with a first replacement value (e.g., a cost associated with the replacement of the content, e.g., as defined by the service provider). The replacement mode information may indicate a first replacement mode (e.g., for masking the replaceable content, such as, for example, a static image, video, sound, etc.). The replacement mode may be associated with a saving value. The device may display a user interface that indicates a saved energy balance value (e.g., from an energy savings account). The user interface may indicate at least a portion of the replaceable content information (e.g., determined based on the saved energy balance value and the replaceable content information, e.g., replaceable content information with costs that the user account's saved energy balance is sufficient to cover, such as, for example, the first replaceable content and/or the first replacement value (e.g., cost)). For example, the device may determine that a second replaceable content is associated with a second replacement value (e.g., cost) that is less than the saved energy balance. Based on the determination that the second replacement value is less than the saved energy balance, the device may refrain from including the second replaceable content in the portion of the replaceable content. The user interface may indicate at least a portion of the replacement mode information. The device may receive a user input indicating a selected replacement mode. The device may receive a user input indicating a selected replaceable content. The selected replaceable content may be associated with a first energy usage. The selected replacement mode may be associated with a second energy usage. The second energy usage may be less than the first energy usage. The device may determine an updated saved balance value based on the user input (e.g., reducing the saved watts balance based on the cost associated with the selected replaceable content and/or increasing the saved watts balance based on the saving value associated with the selected replacement mode). The device may generate replacement content based on the user input. The device may display the generated replacement content. The device may display the generated replacement content at an indicated time slot and/or for a duration. The duration may depend on some criteria, for example, the available saved energy balance or the chosen replaceable content, the time of the day, the current energy use at the service provider, etc. In examples, the device may send a first indication to a second device (e.g., broadcaster/operator). The first indication may be sent based on the user input. The first indication may indicate a transaction parameter associated with the user input (e.g., selected replaceable content and/or selected replacement mode, and/or saved watts balance). The transaction parameter may be associated with the second device reporting scope 3 data. The device may receive a second indication (e.g., from the second device), that indicates a time (e.g., time slot) or a duration associated with the transaction parameter. The indicated time and duration may be used for the generated replacement content.

Details associated with global video chain (e.g., production, encoding, transmission, decoding, rendering) may be provided and/or described herein.

Energy requirements may be reduced. For example, energy requirements of consumer electronics (CE) and mobile devices manipulating images or videos may be reduced (e.g., while displaying images and videos on screen).

Energy consumption of electronic devices (e.g., for electronic devices manufacturers) may be reduced. Reducing energy consumption of electronic devices may reduce (e.g., limit, as much as possible) environmental impact may contribute to the emergence of a sustainable display industry.

An increase in display resolution (e.g., from SD to HD to 4K and beyond) and/or high dynamic range imaging may increase energy usage (e.g., requirements) of display devices. An increase in energy usage may be inconsistent with the global need to reduce energy consumption.

Displays may be a source (e.g., the most important source) of energy consumption, for example, for battery-powered devices (e.g., smartphones) or in the global TV/video distribution chain. However, other components of the video chain may contribute to the total energy balance in relation to video content. Details described herein may apply to multiple types of devices (e.g., does not only target the energy reduction of displays).

Energy consumption reduction may be achieved, for example, using different video/images modification algorithms.

Reduction of the energy requirements of CE and mobile display devices may be described and/or provided, for example, with the goal to preserve or control the quality of experience (e.g., contrast, luminance, temporal smoothness, or color levels for instance).

Image/Video Processing Algorithms for (e.g., dedicated to) energy reduction tasks may realize their tasks with different degrees of Quality of Experience. For example, the image/video processing may introduce no defect, or no visible defects. For example, the image/video processing may create visible defects of different strength or disturbance for the end user.

In the case where no defect or no visible defect is introduced (e.g., flawless case), balancing energy reduction with Quality of Experience may be refrained from being performed (e.g., no need to balance energy reduction with quality of experience), for example, as the quality of experience may not be modified. Scenarios where no defect or no visible defect is introduced may be associated with video broadcast, for example, where there may be a constraint that the image displayed on the user's screen should show as few degradations as possible for a given transmission and display environment. Users may wish to contribute to energy consumption reduction. Users may accept some quality of experience reduction for this purpose (e.g., energy consumption reduction).

High quality (e.g., an absolutely high-quality requirement) may be targeted (e.g., understandable) for feature movies or programs (e.g., with a high artistic value). It can be evaluated that many other program types (e.g., like weather forecast, TV games, cartoons, sitcoms (including some/many ads)) may not need high quality (e.g., an absolutely crisp quality). For example, some users (e.g., not all users) may use high quality for programs, and reducing quality on selected program types may be a possibility for many of them (e.g., even on broadcast programs), for example, if there is a gain in energy (e.g., reduction in energy consumption).

If (e.g., when) defects are introduced, it may (e.g., be required to) give access to a way to balance the energy reduction against QoE, for example, to make QoE reduction acceptable. Such defects (e.g., even if strong) may be used by (e.g., acceptable to) the end user. The presence (e.g., of such defects) may be accepted (e.g., even more accepted), for example, if the users are rewarded e.g., by explicit and direct benefits.

Introducing indicators (e.g., health, money savings, social media indicators) may put the reward on the moral satisfaction of users or future general benefits aspects..

Details associated with using (e.g., debiting) an already populated account with a currency (e.g., Saved Watts) are provided herein. This account (e.g., created by users) may be managed (e.g., by a broadcaster/operator, a subcontractor, or a third party). The currency may be a restricted currency, for example, used for (e.g., limited to) precise usages (e.g., as described herein). Energy savings may be stored on such account depending on some user or group of users', or broadcaster/operator action. The user can purchase/get a reward (e.g., as described above), for example, if (e.g., when) an amount (e.g., sufficient amount) of Saved Watts is available on the account.

The currency to access different rewards can be "Saved Watts", or also "accounted saved energy" as resulting from the users' efforts in consuming less energy. A currency may include a system of money in common use within an environment (e.g., specific environment) over time. The currency may include a medium of exchange. Saved Watts may be used (e.g., defined) as a currency for the media environment. Saved Watts may be earned by energy saving efforts. Saved Watts may give the capacity to obtain goods (e.g., valuable goods), for example, in a media ecosystem. The broadcaster, operator, or a subcontractor working for them may manage these exchanges. The broadcaster, operator, or subcontractor may have the capacity to exchange video clips for Saved Watts.

Converting Saved Watts to an actual currency (e.g., Dollars or Euros) may be a choice of the broadcaster/operator. Rebates may be given (e.g., on the subscription fee). A (e.g., any) monetary type reward may be given.

Generalized energy saving by end users may be provided herein. Details herein may provide an accounting (e.g., easier accounting) of Saved Watts for the broadcaster or a service provider for this task.

As part of the mitigation of climate change, Europe may have (e.g., increasingly requires) companies report on their greenhouse gas emissions. The European Council introduced a reporting requirement for corporate sustainability. Companies in Europe (e.g., including those based elsewhere with European operations) may be required to report indirect emissions across their value chain. There will be soon Obligations of the Carbon Inventory, for example, seen as an opportunity to reduce emissions.

To this end, three Scopes may be associated with reducing emissions (e.g., for the mitigation of climate change). For example, Scope 1 may be associated with direct emissions (e.g., notably caused by company facilities and company vehicles). Scope 2 may be associated with indirect emissions (e.g., due to the purchase of electricity, steam heating and cooling for own use). Scope 3 may be associated with indirect emissions (e.g., due to emissions caused both upstream and downstream in the company's value chain).

Scope 3 reporting may be broken down into a number of different classes (e.g., as described in Greenhouse Gas Protocol "Corporate Value Chain (Scope 3) Accounting and Reporting Standard", which is a supplement to the GHG Protocol Corporate Accounting and Reporting Standard). The Scope 3 upstream activities may include one or more of the following: Purchased goods and services; Capital goods; Fuel and energy-related activities not included in scope 1 or scope 2; Upstream transportation and distribution; Waste generated in operations; Business travel; Employee commuting; Upstream leased assets; etc. Scope 3 downstream activities may include one or more of the following: Downstream transportation and distribution; Processing of sold products; Use of sold products; End-of-life treatment of sold products; Downstream leased assets; Franchises; Investments; etc.

The Scope 3 categories relevant for broadcasters and media streaming companies may include Category, 'purchased goods and services', and Category, 'use of products sold' .

A broadcaster sending out a program through digital terrestrial television (DTV) may be considered. An end user device (e.g., a television receiving the program) may use energy to display it. A television that uses energy to display the program may cause emissions that are considered 'Scope 3, Category indirect use phase'.

A broadcaster may have a gain in its SCOPE 3 obligations, for example, if (e.g., when) a user (e.g., decides to) reduces this energy by a video processing (e.g., as described herein) and made available by the broadcaster. Knowing this, in return, the broadcaster can reward the user for their effort and offer some gratification.

A carbon footprint may be (e.g., globally) reduced (e.g., need to be reduced), for example, due to climate change. Reducing the carbon footprint may be done in the CE domain, for example, by reducing the energy consumption of devices.

Energy savings may be registered (e.g., in terms of Saved Watts), for example, on accounts linked to a media user, media group of users, or a media equipment (e.g., TV set or display equipped devices) managed by a service provider. While saving energy is an effort for the users (e.g., in term of trade-offs on video quality, e.g., in term of room illumination adjustment or in terms of switching off the device), a (e.g., some) reward may be available (e.g., need to be available) to preserve the motivation of users to act for energy preservation.

Users may be motivated to save energy while watching their programs on TV. Users may accept a quality (e.g., poorer quality) on some programs or to dim the screen or to switch it off, for example, to save more energy. Users may be compensated (e.g., with rewards), for example, based on their efforts (e.g., to counterbalance their efforts. Benefits (e.g., practical benefits) and the means for compensation and proportion to energy saving efforts may be described and/or provided herein.

An algorithm strength may correspond to a fine and continuous manner of controlling the strength of an (e.g., any) algorithm. The strength may illustrate the quality of the output content. The strength may be linked (e.g., directly linked) with the amount of energy consumption or reduction of the algorithm. A link with the amount of energy saved may not be (e.g., may not be necessarily) explicit and clear for the end users and may not be the best way to encourage them to lower the quality of the output content (e.g., which may consequently lower they energy consumption).

Display information may be presented to the user, for example, in the form of indicators. Users may be given an access to an explicit view of the value of some indicator (e.g., understandable indicators), for example, such as direct benefits for their health, direct economic benefits, direct reduction in terms of pollution levels, direct indication on the protection of the biodiversity, direct indication on the preservation of the amount of raw materials, and benefit in terms of social recognition, for example, that may derive from an action/decision of the users to reduce the quality of the content consumed.

The link between quality reduction and the other comprehensible indicators may be accessible in a fine and continuous manner, for example, which may allow the users to control (e.g., precisely control) the level of quality in relation to the level of the indicators.

Energy Credit may be included as a service (e.g., service concept). Energy Credit may be used as a credit limit used by the operator network's "credit control."

Energy credit may be included in a service (e.g., service concept). Energy credit may be used as an abstract measure of the energy impact on the network of delivering a service to a WTRU. According to this clause, subject to operator's policy, the system (e.g., 5G system) may support (e.g., be required) to support a mechanism to perform energy consumption credit limit control for services without a quality of service (QoS) criteria. Energy credits (e.g., associated to a subscriber and used by the operator network's "credit control") may be consumed depending on the WTRU behavior, e.g., depending on the data volume time, location, and/or based on the amount of energy consumed by the network to provide the service.

Energy Credit may allow counting the amount of energy consumed (e.g., already consumed) by any user while using a service, or a pool of services.

In a program (e.g., reward program, classic rewarding programs), users may be rewarded for consuming more, e.g., watching more programs.

An account (e.g., a local or remote file or database) may store energy savings gained by a user from actions to reduce energy consumption of a TV set, for example, which may use the stored energy as a currency equivalent for the user to purchase video/media rewards.

The opportunity to the users to decrease their energy consumption may be exploited. Energy saving information can be estimated or measured and/or stored on a specific account linked to the user or the TV set. As a reward, the savings (e.g., considered as a currency) may give access to media rewards for the user.

Media rewards may include may include a reward (e.g., any suitable reward) relative to media including, for example, one or more of the following:: masking some programs, e.g., ads for a period of time;. Rewards or saved credits can also be transferred for someone else (e.g., to another user).

Details are provided herein relating to masking some program.

Tangible benefits can be proposed to the user (e.g., directly intelligible), for example, motivating them to use tools or behaviors for energy reduction. The users may be encouraged to act even by reducing the level of quality of the video algorithm, for example, by switching off or dimming their TV set.

For the broadcaster or operator, there may be a direct benefit of energy reduction by users, for example, contributing to their Scope 3 reporting.

Using some image processing algorithms, the energy consumption of visual media presentation or display (e.g., on TV sets or on mobile displays) may be minimized. TV may not be limited to a TV and may include one or more of a TV or mobile display, AR sets, VR sets, etc.

The consumption reduction may be performed while maintaining/mastering the quality of experience (QoE) of the visual media presentation affecting resolution at variable levels.

Users may choose a balance (e.g., personal balance) between a given quality level of a displayed content after some video processing and the corresponding energy reduction achieved by modifying the quality level.

A value of energy reduction (e.g., alone) may not be sufficiently understandable nor motivating enough for the users to change their habits and accept a reduction of quality.

Energy savings may be computed and/or proposed to the users, for example, to exchange energy savings they can achieve into tangible media/video rewards purchase with energy saving credits. The reward may mask a (e.g., some) program for a duration (e.g., some periods of time) as described herein.

A program may be masked, for example, for a duration (e.g., for some periods of time).

A (e.g., some) program may not be of specific interest to the users (e.g., ads, weather forecast, etc.). Users may (e.g., prefer to) replace these programs with a black screen (e.g., to save energy) or other static or animated images (e.g., wellness images or short videos), or with music, for example.

The TV manufacturer may implement program replacement in the TV set itself, for example, based on the Saved Energy Account and with an agreement with the Broadcaster/Operator or standardized messages. A network operator can implement program replacement in a network node. The TV set or network node may modify the incoming channel and/or propose an alternate option (e.g., as described above), for example, depending on the saved energy account, and/or based on a signal indicating that a specific program starts (e.g., ads, or weather forecast).

In examples, different "prices" in Saved Watts may be applied, for example, depending on the choice of the option by the user (e.g., if more than one option). Displaying a black screen may lead to less energy consumption (e.g., compared to another program, e.g., including the original ad or weather forecast program). Thus, the user choice may also again interact with the user Saved Watts account to credit back the user with additional Saved Watts (e.g., choosing a black screen with a lower energy consumption than the content to be replaced would additionally credit the user with Saved Watts). The reward price of displaying a black screen may be less than displaying a (e.g., any other) program. This price can be negative, for example, adding credits to the Saved Watts account.

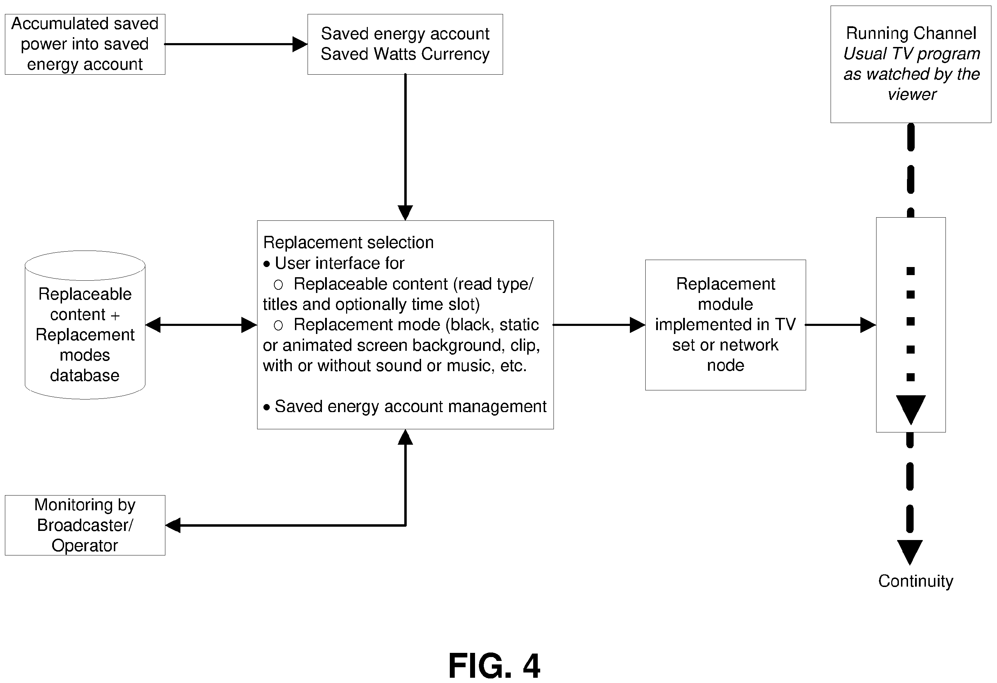

FIG. 4 illustrates an example flow of a saved energy account transaction for replacing content with replacement mode.

As shown in FIG. 4, an interactive dialogue step is described and/or provided. A replaceable content and/or replacement mode database may be consulted (e.g., interacted with). The user may (e.g., as a goal) select one or more of the following: a replaceable content (e.g., a program category, or a specific time slot program and optionally a duration of replacement); a replacement content (e.g., a static image, for example a black image, an animated screen background (e.g., typically a screen saver background sequence), a video clip, sound or music (e.g., optionally); etc.).

The proposed replaceable content and the replacement content may both be associated to different prices in Saved Watts. The saved energy account may be consulted to know the amount available (e.g., start of transaction, as shown in FIG. 4)

In examples, the dialogue may be closed, for example, if the amount (e.g., saved watts) is zero or too small for any reward (e.g., end of transaction). This (e.g., closing of the dialogue, check to see whether saved watts balance is sufficient) may be performed, for example, before accessing the database.

Possible Replaceable contents may be presented to the user, e.g., in a list, in a next time period, with an associated cost in Saved Watts currency.

Programs of a category may be marked replaceable, for example, if the credit on the Saved Energy Account is sufficient.

The user may select in a Replacement mode from a list of choices a static image, for example, a black image, an animated screen background (e.g., typically a screen saver background sequence), a video clip; etc. Sound or music may be proposed and/or selected.

The Saved energy account may be updated (e.g., end of transaction, for example, as shown in FIG. 4).

The Broadcaster/Operator may be informed of the transaction parameters (e.g., as shown in FIG. 4).

The Broadcaster/Operator may prepare indicators, for example, a time slot start and/or end information, for example, to realize the replacement. The duration of the replacement may be conditioned on the Saved Watts account.

As shown in FIG. 4, the replacement module may perform replacement.

Replacement mode information (e.g., type and data from the database) may be received. A time slot start and/or end may be received (e.g., from the broadcaster/operator).

Replacement content may be generated and displayed, for example, during the time slot

The Broadcaster/Operator may update their Scope 3 reporting data.

SEI messages or equivalent metadata activating and ending the program replacements may be described and used in the interaction process, e.g., between the device and the service provider. The replacement mode may be defined and/or described (e.g., as described herein).

The broadcaster/operator or their partner in charge of the Saved Watts management and usage may be aware of a risk of rebound effect, e.g., the possibility of a higher energy consumption for the reward than from the initial savings. A counter measure to such effect may be set up, for example, limiting consumption for the reward. A specific conversion rate (e.g., with loss) may be used between the initial savings and the final reward content consumption.

The users and the broadcaster or operator may have an advantage to count saved Watts, for example, if (e.g., when) reducing the energy consumption of displays. The users may be rewarded if (e.g., when) spending their savings while the broadcaster or operator can manage these savings and report them in their Scope 3 reporting.

The availability of an account of Saved Watts for a display can influence the choices of a user toward reducing his/her energy consumption (e.g., with a clearer view of the consequences of their choices and the motivation of being rewarded). Users may be more inclined to act towards reducing their level of acceptable quality, for example consequently lowering their energy consumption and their green house gas emission.

The examples described herein may relate to video coding/decoding, distribution, rendering and consumption.

Accounting Saved Watts and/or later activating the reward as described may be detected based on interaction with the user.

On the broadcaster / operator side, it is possible to detect the signaling messages enabling the interaction with the user account and rewards.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "*I*", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A first device comprising,
a processor configured to:
receive replacement configuration information comprising replaceable content information and replacement mode information, wherein the replaceable content information indicates at least a first replaceable content associated with a first replacement value, and wherein the replacement mode information indicates at least a first replacement mode;
display a user interface that indicates a saved balance value, at least a portion of the replaceable content information, and at least a portion of the replacement mode information;
receive a user input indicating a selected replaceable content and a selected replacement mode;
determine an updated saved balance value based on the user input;
generate replacement content based on the user input; and
display the generated replacement content.

2. The first device of claim 1, wherein the first replacement mode is associated with a first saving value, wherein the updated saved balance value is determined based on a saving value associated with the selected replacement mode and a replacement value associated with the selected replacement mode.

3. The first device of any of claims 1 to 2, wherein the at least the portion of the replaceable content information comprises the first replaceable content and the first replacement value.

4. The first device of any of claims 1 to 3, wherein the selected replaceable content is associated with a first energy usage, wherein the generated replacement content is associated with a second energy usage, and wherein the second energy usage is lower than the first energy usage.

5. The first device of any of claims 1 to 4, wherein the replaceable content information indicates a second replaceable content associated with a second replacement value, and wherein the processor is further configured to:
determine the portion of the replaceable content information based on the saved balance value and the replaceable content information.

6. The first device of claim 5, wherein if the first replacement value is less than or equal to the saved balance value, the portion of the replacement mode information comprises the first replaceable content, and wherein if the second replacement value is less than or equal to the saved balance value, the portion of the replacement mode information comprises the second replaceable content.

7. The first device of any of claims 1 to 6, wherein the first replacement mode is one of a static image, a video, or a sound.

8. The first device of any of claims 1 to 7, wherein the processor is further configured to:
send a first indication to a second device based on the user input, wherein the first indication indicates a transaction parameter; and
receive a second indication that indicates a time slot associated with the transaction parameter, wherein the generated replacement content is displayed during the time slot.

9. The first device of any of claims 1 to 8, wherein the processor is further configured to:
send an indication to a second device based on the user input, wherein the indication indicates a transaction parameter associated with the second device reporting scope 3 data.

10. A method performed by a first device comprising,
receiving replacement configuration information comprising replaceable content information and replacement mode information, wherein the replaceable content information indicates at least a first replaceable content associated with a first replacement value, and wherein the replacement mode information indicates at least a first replacement mode;
displaying a user interface that indicates a saved balance value, at least a portion of the replaceable content information, and at least a portion of the replacement mode information;
receiving a user input indicating a selected replaceable content and a selected replacement mode;
determining an updated saved balance value based on the user input;
generating replacement content based on the user input; and
displaying the generated replacement content.

11. The method of claim 10, wherein the first replacement mode is associated with a first saving value, wherein the updated saved balance value is determined based on a saving value associated with the selected replacement mode and a replacement value associated with the selected replacement mode.

12. The method of any of claims 10 to 11, wherein the at least the portion of the replaceable content information comprises the first replaceable content and the first replacement value.

13. The method of any of claims 10 to 12, wherein the user input indicates a selected replaceable content, wherein the selected replaceable content is associated with a first energy usage, wherein the generated replacement content is associated with a second energy usage, and wherein the second energy usage is lower than the first energy usage.

14. The method of any of claims 10 to 13, wherein the replaceable content information indicates a second replaceable content associated with a second replacement value, and wherein the method further comprises:
determining the portion of the replaceable content information based on the saved balance value and the replaceable content information.

15. The method of claim 14, wherein if the first replacement value is less than or equal to the saved balance value, the portion of the replacement mode information comprises the first replaceable content, and wherein if the second replacement value is less than or equal to the saved balance value, the portion of the replacement mode information comprises the second replaceable content.
